# EUROPEAN PATENT SPECIFICATION

(11) **EP 2 602 994 B1**
(45) Date of publication and mention of the grant of the patent: **13.06.2018**
(21) Application number: 11828910.7
(22) Date of filing: 22.09.2011
(51) Int. Cl.: H04N 7/173, H04H 60/13, H04H 60/80

(54) **RECEIVING DEVICE, RECEIVING METHOD, AND PROGRAM**
EMPFANGSVORRICHTUNG, EMPFANGSVERFAHREN UND PROGRAMM DAFÜR
DISPOSITIF DE RÉCEPTION, PROCÉDÉ DE RÉCEPTION, ET PROGRAMME ASSOCIÉ

(30) Priority: 01.10.2010 US 388999 P; 15.06.2011 US 201161497344 P
(43) Date of publication of application: 12.06.2013
(73) Proprietor: Saturn Licensing LLC, New York, NY 10022-3211 (US)
(72) Inventor: KITAZATO, Naohisa, Tokyo 108-0075 (JP)
(74) Representative: Witte, Weller & Partner Patentanwälte mbB
(86) International application number: PCT/JP2011/071566
(87) International publication number: WO 2012/043353

(56) References cited:
- JP-A- 2007 116 669
- JP-A- 2009 118 343
- JP-A- 2010 288 192
- US-A1- 2006 194 535
- US-A1- 2010 205 628

## Description

### [Technical Field]

This technology relates to a reception device, a reception method, and a program. More particularly, this technology relates to a reception device, a reception method, and a program configured to control the operation of a predetermined application program in linkage with the progress of AV content such as a TV program.

### [Background Art]

In digital TV broadcasting, not only a service of broadcasting TV programs but also a service called data broadcasting has been implemented (for example, see Japanese Patent Laid-open No. 2006-50237). Studies are underway to introduce more sophisticated services utilizing the Internet for digital TV broadcasting in the future.

The more advanced services under study involving the use of the Internet for digital TV broadcasting include, for example, one which would supply a reception device side via the Internet with an application program or the like operating in linkage with the progress of AV content such as TV programs and control the operation of the reception device accordingly, and one which would operate an external device connected with the reception device in linkage with AV content.

### [Citation List]

### [Patent Literature]

A previously proposed arrangement is disclosed in US 2010/0205628 A1

### [Summary]

### [Technical Problem]

However, a technology that would control the operation of an external device connected with a reception device in linkage with the progress of currently being received AV content has not been established yet.

This technology has been made in view of the above circumstances and aims to control the operation of an external device connected with a reception device in linkage with the progress of AV content.

### [Solution to Problem]

According to one aspect of this technology, there is provided a reception device according to claim 1.

According to other aspects of this technology, there are provided a reception method according to claim 8 and a program according to claim 14 corresponding to the above-outlined reception device embodying one aspect of the technology.

### [Advantageous Effect of Invention]

According to the aspects of the present technology, an external device connected with the reception device can be operated in linkage with the progress of AV content.

### [Brief Description of Drawings]

Fig. 1 shows a typical configuration of a broadcasting system.
Fig. 2 shows a typical structure of a broadcast unit.
Fig. 3 shows a typical structure of a reception device.
Fig. 4 shows a typical structure of a trigger processing block.
Fig. 5 shows a typical structure of an external device.
Fig. 6 lists items included in trigger information of a Register command.
Fig. 7 lists items included in trigger information of an Execute command.
Fig. 8 lists items included in trigger information of an Inject_event command.
[Fig. 9]

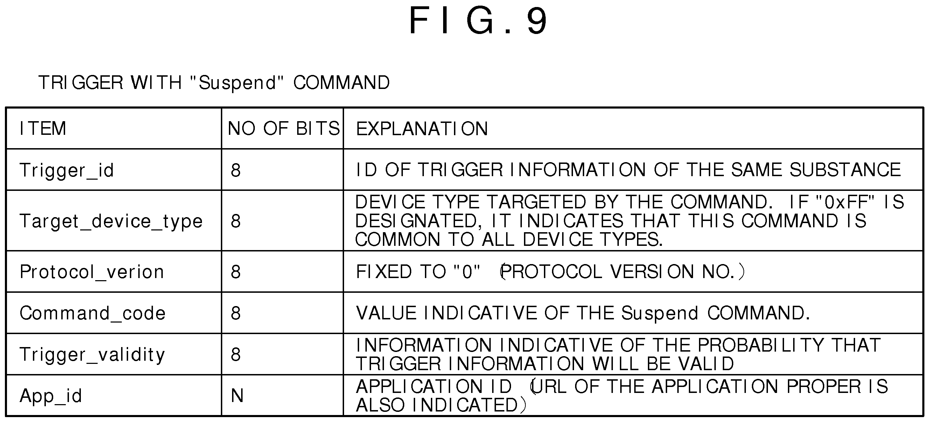

   Fig. 9 lists items included in trigger information of a Suspend command.
[Fig. 10]

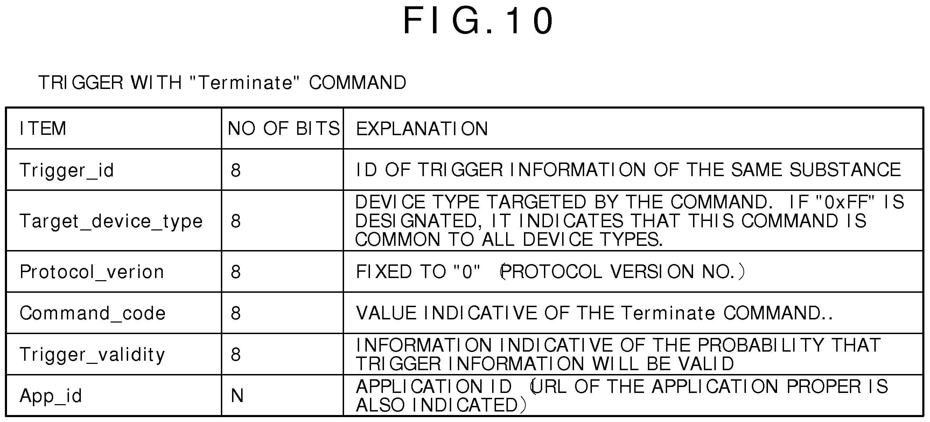

   Fig. 10 lists items included in trigger information of a Terminate command.
[Fig. 11]

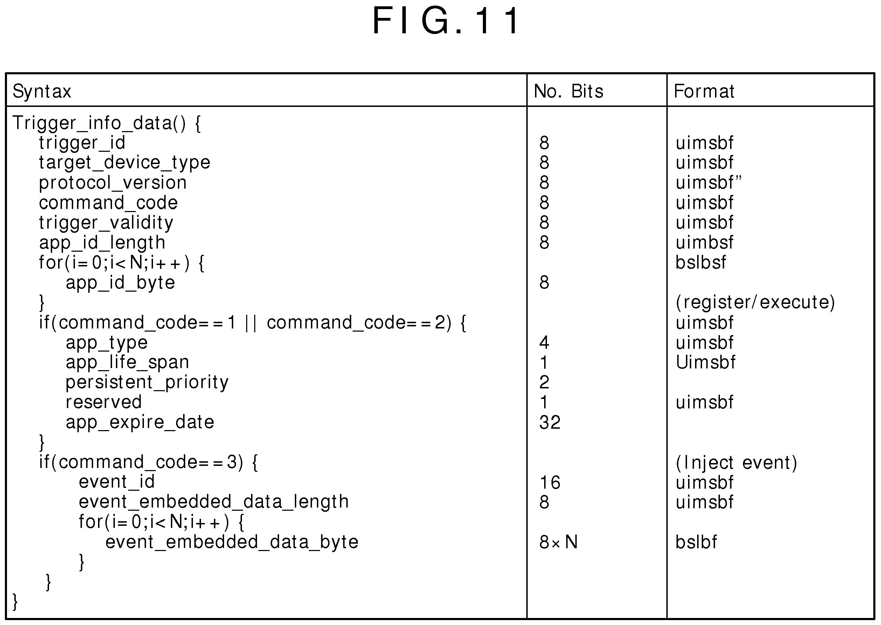

   Fig. 11 shows a typical syntax of trigger information.
[Fig. 12]

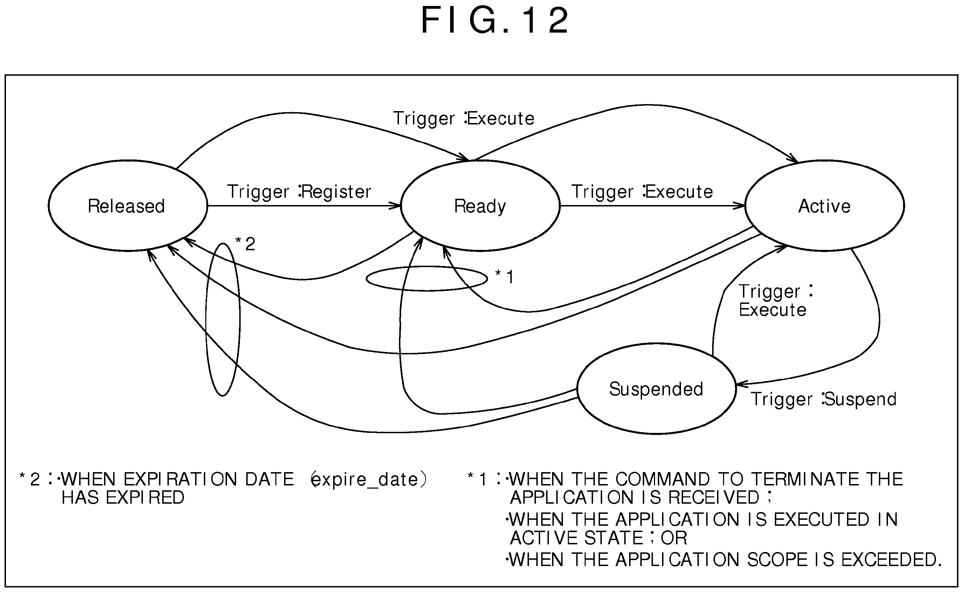

   Fig. 12 shows state transitions of a data broadcast application.
[Fig. 13]

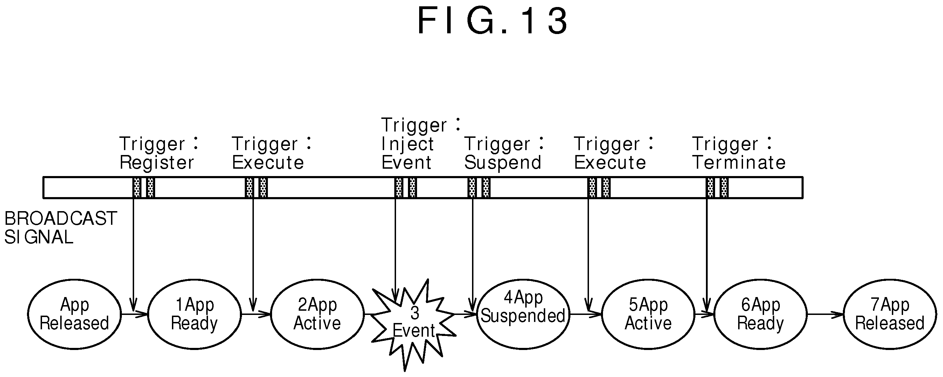

   Fig. 13 shows relations in state transitions between each command and a data broadcast application.
[Fig. 14]

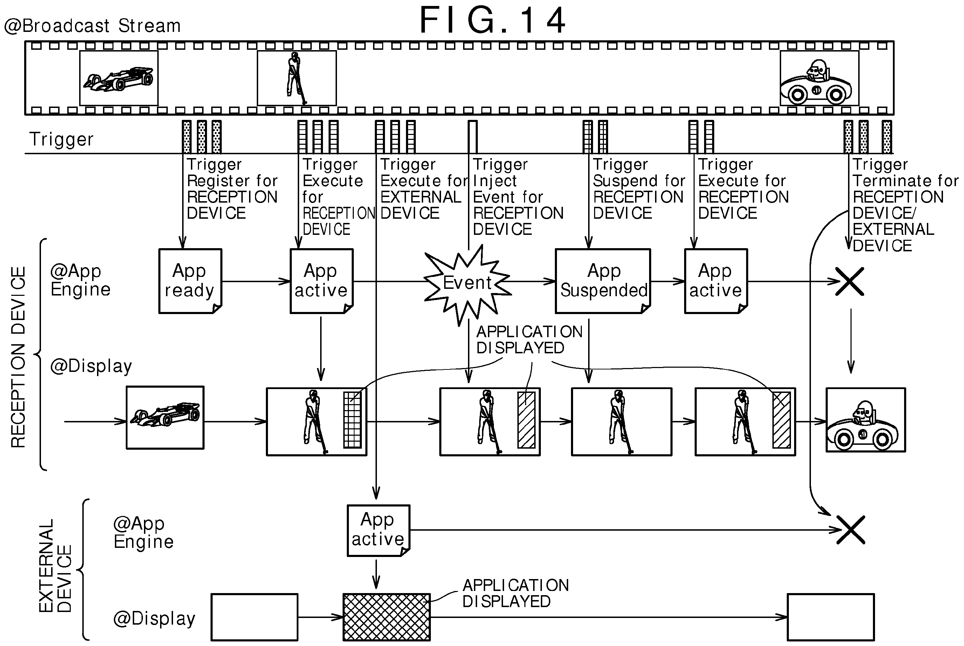

   Fig. 14 shows a typical operation scenario in effect when different data broadcast applications are acquired.
[Fig. 15]

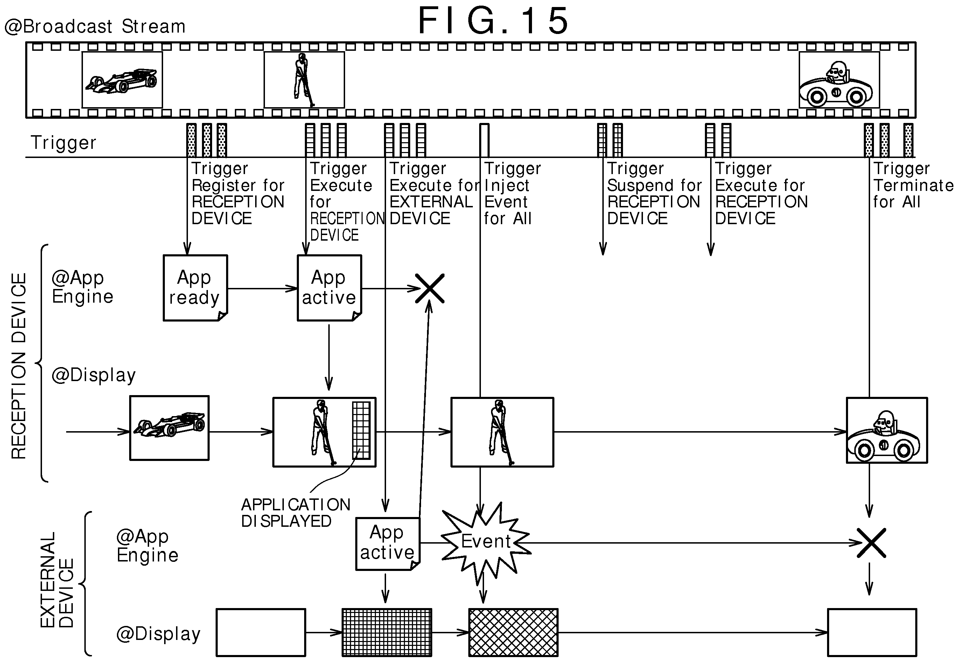

   Fig. 15 shows a typical operation scenario in effect when a same data broadcast application is acquired.
[Fig. 16]

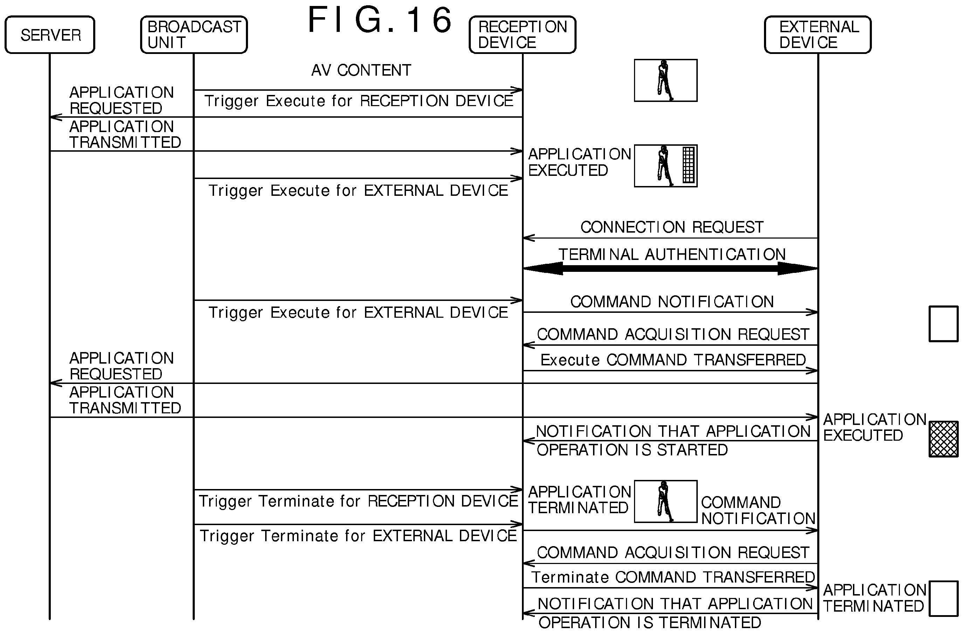

   Fig. 16 shows a typical operation sequence in effect when different data broadcast applications are acquired.
[Fig. 17]

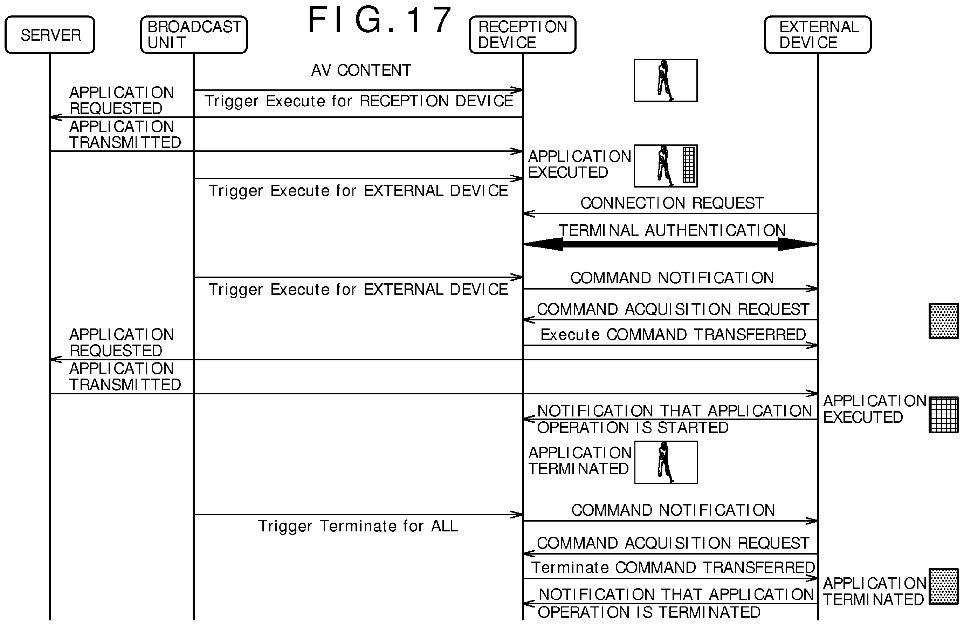

   Fig. 17 shows a typical operation sequence in effect when a same data broadcast application is acquired.
[Fig. 18]

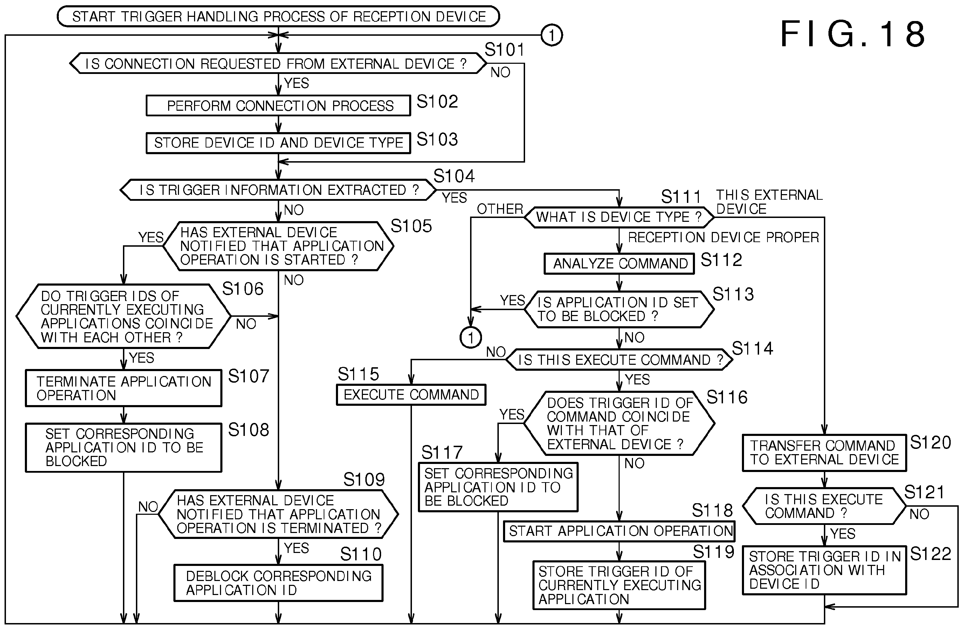

   Fig. 18 is a flowchart explaining a trigger handling process of the reception device.
[Fig. 19]

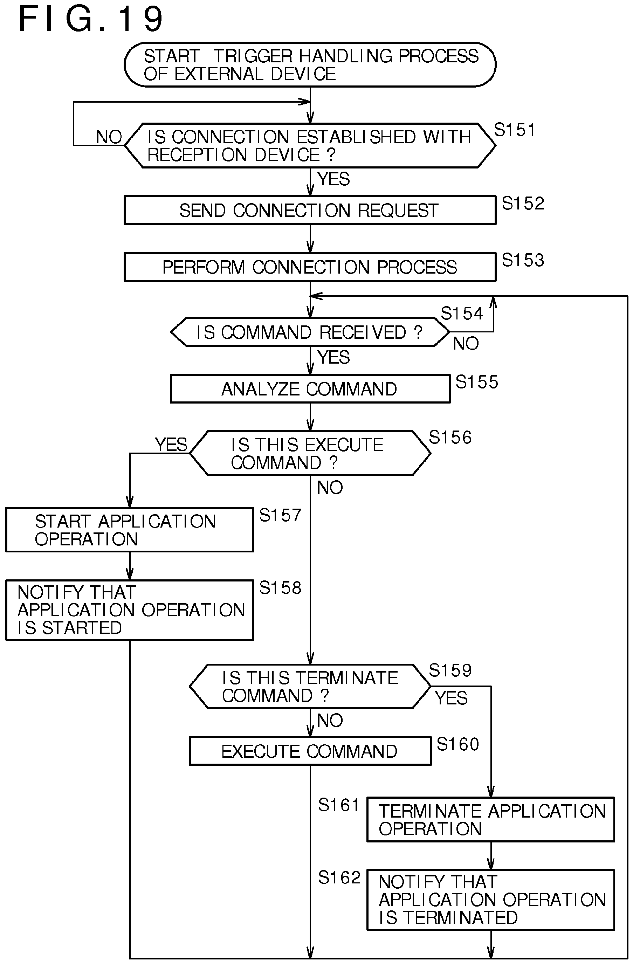

   Fig. 19 is a flowchart explaining a trigger handling process of the external device.
[Fig. 20]

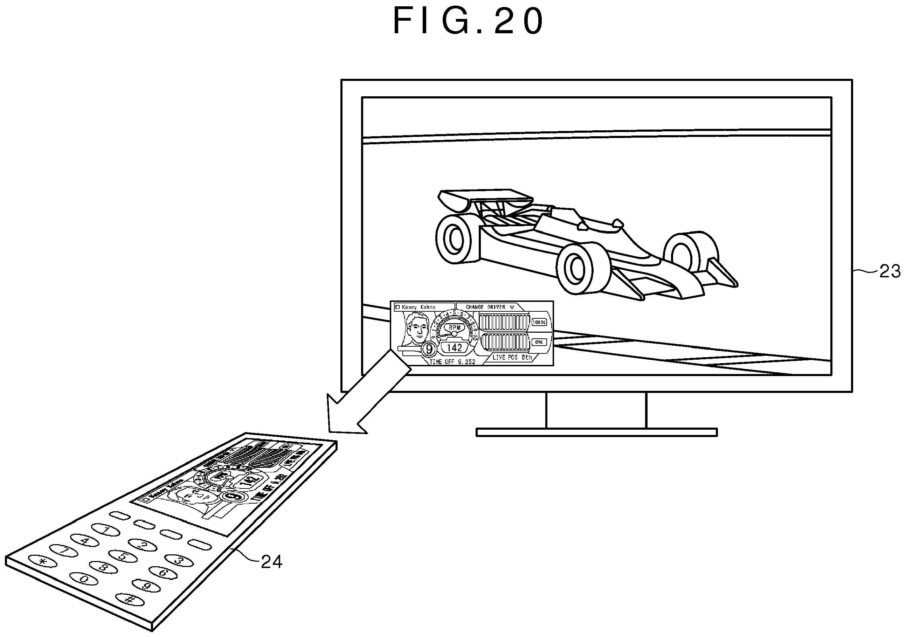

   Fig. 20 shows a typical coordination of data broadcast applications.
[Fig. 21]

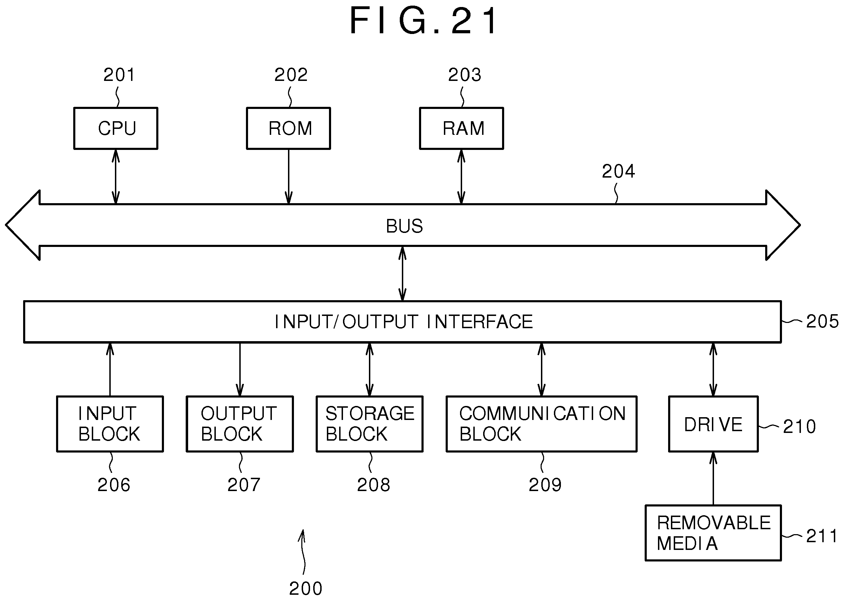

   Fig. 21 shows a typical structure of a computer.

### [Description of Embodiment]

An embodiment of this technology is explained below in reference to the accompanying drawings.

### [Typical Configuration of Broadcasting System]

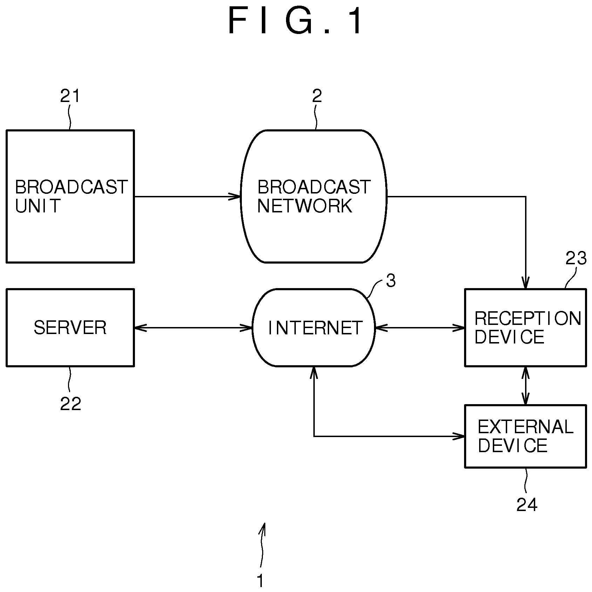

Fig. 1 shows a typical configuration of a broadcasting system.

A broadcasting system 1 is made up of a broadcast unit 21 and a server 22 set up on the sender side, and a reception device 23 and an external device 24 installed on the receiver side.

The broadcast unit 21 is configured so as to transmit a digital TV broadcast signal via a broadcast network 2 such as a terrestrial digital broadcast network. The digital TV broadcast signal is used to transmit AV content such as TV programs and CMs.

Also, the broadcast unit 21 transmits trigger information, included in the digital TV broadcast signal, as a command regarding the operation of a data broadcast application program (also called the data broadcast application hereunder) in linkage with AV content. Specifically, the trigger information may be transmitted included in a transport stream (called the TS hereunder) of the digital TV broadcast signal or embedded in a video signal or an audio signal.

In addition to information indicating a command type, the trigger information includes information indicative of a destination from which to acquire the data broadcast application or the like. The trigger information will be discussed later in detail.

In response to a request from the reception device 23 or external device 24 having accessed the server 22 via the Internet 3, the server 22 supplies the data broadcast application.

The reception device 23 receives the digital broadcast signal broadcast from the broadcast unit 21 and outputs images and sounds of the received AV content to a monitor (not shown). The reception device 23 also accesses the server 22 via the Internet 3 to acquire the data broadcast application therefrom and execute the acquired data broadcast application.

The reception device 23 is further connected with the external device 24, and controls the operation of the data broadcast application to be executed by the external device 24.

Incidentally, the reception device 23 may be set up as an independent device or incorporated in a TV set or in a video recorder, for example.

The external device 24 is connected with the reception device 23 and, under control thereof, accesses the server 22 via the Internet 3 to acquire the data broadcast application and execute the acquired data broadcast application.

The external device 24 may be a smartphone, a portable information terminal, a digital TV set, or a video recorder, for example.

The broadcasting system 1 is configured as explained above.

### [Typical Structure of Broadcast Unit]

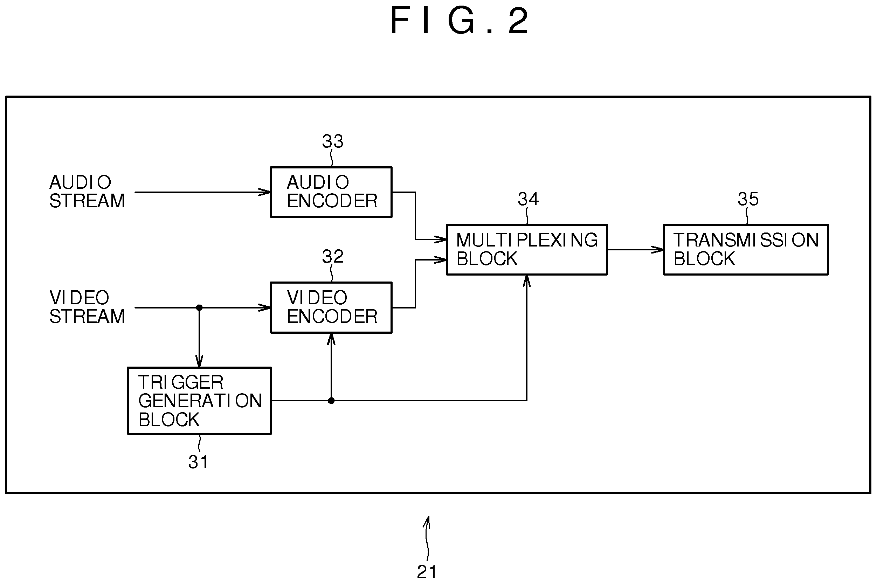

Fig. 2 shows a typical structure of the broadcast unit.

The broadcast unit 21 is made up of a trigger generation block 31, a video encoder 32, an audio encoder 33, a multiplexing block 34, and a transmission block 35.

The trigger generation block 31 generates trigger information in keeping with the progress of a video stream containing TV programs and CMs input from a preceding stage, and outputs the generated trigger information to the video encoder 32 and multiplexing block 34.

The video encoder 32 encodes the video stream of AV content such as TV programs input from the preceding stage in accordance with a predetermined encoding method, and supplies the encoded video stream to the multiplexing block 34. Typical encoding methods that may be adopted by the video encoder 32 include MPEG-2 (Moving Picture Experts Group phase 2) and the H.264 standard, for example.

Also, upon encoding the video stream, the video encoder 32 embeds therein the trigger information coming from the trigger generation block 31 and performs encoding. The video encoder 32 outputs the video stream thus encoded to the multiplexing block 34.

The audio encoder 33 encodes by a predetermined encoding method an audio stream corresponding to the video stream input to the video encoder 32, and outputs the encoded audio stream to the multiplexing block 34. Typical encoding methods that may be adopted by the audio encoder 33 include AC3 (Audio Code number 3) and AAC (Advanced Audio Coding), for example.

The multiplexing block 34 is supplied with the encoded video stream from the video encoder 32, the encoded audio stream from the audio encoder 33, and the trigger information from the trigger generation block 31.

The multiplexing block 34 multiplexes the encoded video stream, encoded audio stream, and trigger information, and supplies a resulting multiplexed stream to the transmission block 35. Specifically, the video and audio streams and the trigger information may be multiplexed into the TS, for example. Alternatively, the streams and trigger information may be multiplexed into an ISO base media file format (MP4) suitable for the transmission of digital TV broadcasts over the network.

The transmission block 35 transmits the multiplexed stream fed from the multiplexing block 34 as the digital TV broadcast signal.

The broadcast unit 21 is structured as explained above.

In the foregoing description, the trigger information was shown not only embedded in the video stream but also multiplexed into the multiplexed stream. Alternatively, the trigger information may be either embedded in the video stream, or multiplexed into the multiplexed stream. The trigger information may also be transmitted by an other method otherwise, such as in a manner embedded in the audio stream.

### [Typical Structure of Reception Device]

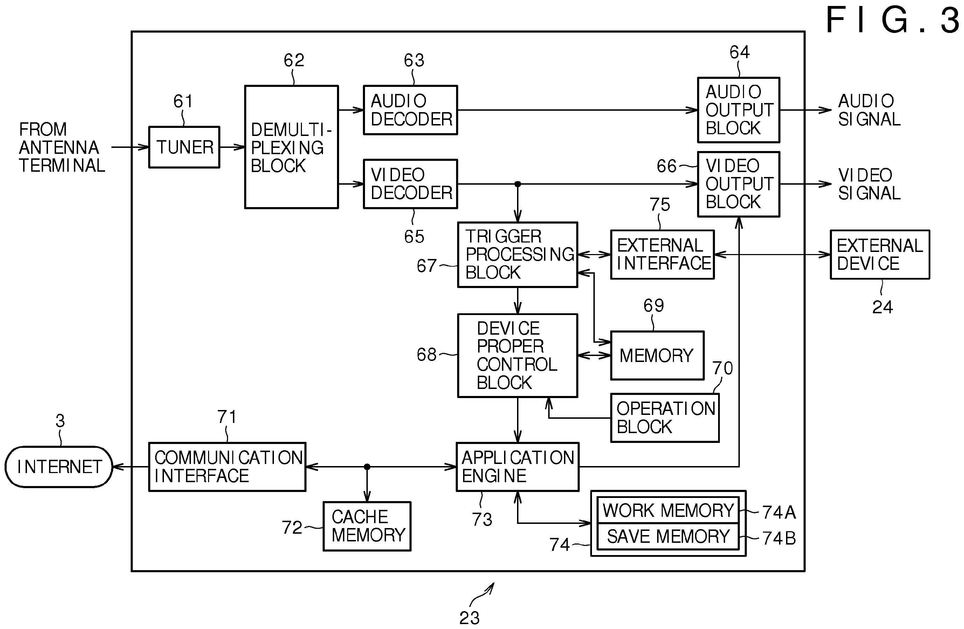

Fig. 3 shows a typical structure of the reception device.

The reception device 23 is made up of a tuner 61, a demultiplexing block 62, an audio decoder 63, an audio output block 64, a video decoder 65, a video output block 66, a trigger processing block 67, a device proper control block 68, a memory 69, an operation block 70, a communication interface 71, a cache memory 72, an application engine 73, an application memory 74, and an external interface 75.

The tuner 61 receives and demodulates the digital TV broadcast signal corresponding to a service (i.e., channel) selected by a user, and supplies the multiplexed stream resulting from demodulation to the demultiplexing block 62.

The demultiplexing block 62 demultiplexes an audio encoded signal and a video encoded signal from the multiplexed stream supplied from the tuner 61, and feeds the audio encoded signal to the audio decoder 63 and the video encoded signal to the video decoder 65.

The audio decoder 63 decodes the audio encoded signal fed from the demultiplexing block 62, and supplies the decoded audio signal to the audio output block 64.

The audio output block 64 outputs the audio signal fed from the audio decoder 63 to a subsequent stage such as a speaker.

The video decoder 65 decodes the video encoded signal fed from the demultiplexing block 62, and supplies the decoded video signal to the video output block 66 and trigger processing block 67.

The video output block 66 outputs the video signal coming from the video decoder 65 to a subsequent stage such as a display unit. Also, the video output block 66 combines the video signal supplied from the video decoder 65 and a video signal of a data broadcast application fed from the application engine 73, and outputs to the subsequent stage.

The trigger processing block 67 continuously monitors the video signal supplied from the video decoder 65 to extract the trigger information embedded in the video signal. The trigger processing block 67 analyzes the extracted trigger information and supplies the result of the analysis to the device proper control block 68.

Also, based on the analyzed result of the trigger information, the trigger processing block 67 supplies the external interface 75 with a command included in the trigger information and addressed to an external device (external device 24) and thereby controls the operation of the data broadcast application to be executed by the external device 24. Furthermore, the trigger processing block 67 records various items of information to the memory 69 or retrieves information stored in the memory 69 as needed.

The trigger processing block 67 will be discussed later in more detail.

The device proper control block 68 controls the operation of the components of the reception device 23 by executing control programs held in the memory 69. The device proper control block 68 is further supplied with the analyzed result of the trigger information from the trigger processing block 67. In accordance with a command included in the trigger information and addressed to the reception device proper (reception device 23), the device proper control block 68 performs control to acquire, register, or execute a data broadcast application, to fire an event, to suspend the data broadcast application, or to terminate the data broadcast application.

The memory 69 records control programs and diverse items of information. The operation block 70 accepts various operations performed by the user and supplies the device proper control block 68 with operation signals corresponding to the user's operations.

The communication interface 71 under control of the application engine 73 connects to the server 22 via the Internet 3. Under control of the device proper control block 68, the application engine 73 acquires the data broadcast application from the server 22 via the communication interface 73 and the Internet 3 and retains the acquired data broadcast application in the cache memory 72.

Under control of the device proper control block 68, the application engine 73 retrieves the data broadcast application held in the cache memory 72 and executes the retrieved data broadcast application. The video signal of the currently executing data broadcast application is supplied to the video output block 66.

The application memory 74 is composed of a work memory 74A and a save memory 74B. The application engine 73 records data about the currently executing data broadcast application (specifically, data including a hierarchy of information being displayed) to the work memory 74A. Also, upon suspending the currently executing data broadcast application, the application engine 73 moves data in the work memory 74A to the save memory 74B in the application memory 74. Upon resuming the suspended data broadcast application, the application engine 73 moves data from the save memory 74B to the work memory 74A to restore the state in effect before the suspension.

The external interface 75 establishes connection with the external device 24 in wired or wireless fashion, and transmits to the connected external device 24 the command supplied from the trigger processing block 67 and addressed to the external device 24. Furthermore, the external interface 75 receives notifications sent from the external device 24 to the reception device 23 and supplies the received notifications to the trigger processing block 67.

The reception device 23 is structured as explained above.

### [Typical Detailed Structure of Trigger Processing Block]

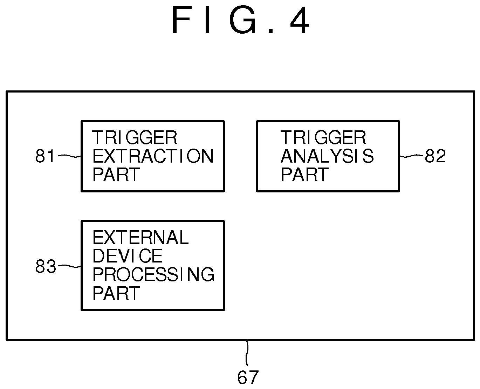

Fig. 4 shows a typical detailed structure of the trigger processing block indicated in Fig. 3.

The trigger processing block 67 is made up of a trigger extraction part 81, a trigger analysis part 82, and an external device processing part 83.

The trigger extraction part 81 continuously monitors the video signal supplied from the video decoder 65, extracts the trigger information embedded in the video signal, and feeds the extracted trigger information to the trigger analysis part 82.

The trigger analysis part 82 analyzes the trigger information supplied from the trigger extraction part 81, and supplies the device proper control block 68 with the command included in the trigger information and addressed to the reception device proper. Also, the trigger analysis part 82 supplies the external device processing part 83 with the command included in the trigger information and addressed to the external device.

The external device processing part 83 supplies the external interface 75 with the command fed from the trigger analysis part 82 and addressed to the external device so that the command may be transferred to the external device 24. The external device processing part 83 also performs various processes regarding the external device 24.

The trigger processing block 67 is structured as explained above.

### [Typical Structure of External Device]

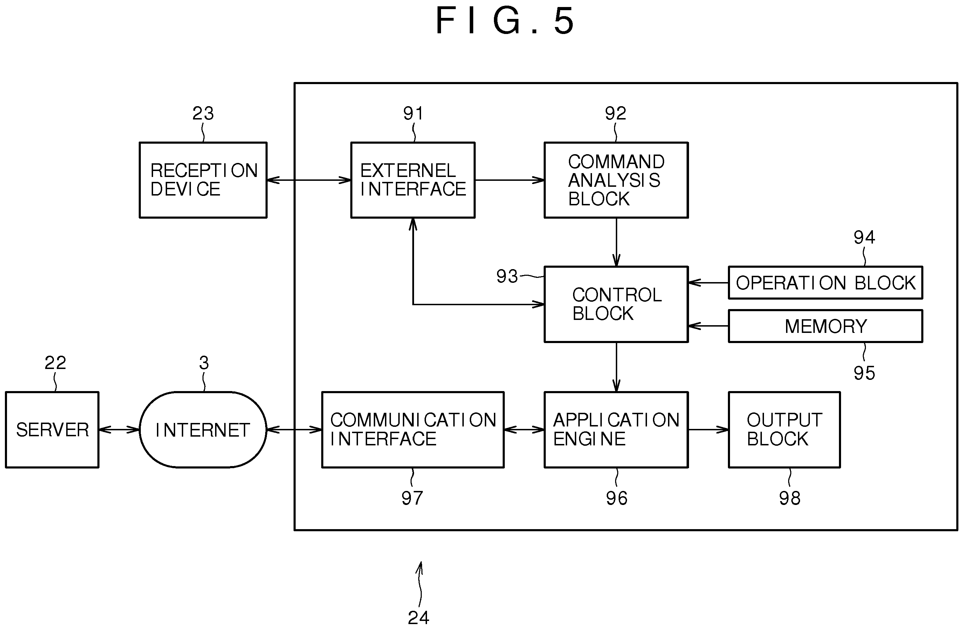

Fig. 5 shows a typical structure of the external device.

The external device 24 is made up of an external interface 91, a command analysis block 92, a control block 93, an operation block 94, a memory 95, an application engine 96, a communication interface 97, and an output block 98.

The external interface 91 is connected with the external interface 75 of the reception device 23 in wired or wireless fashion, and receives the command sent from the reception device 23 and addressed to the external device. The external interface 91 feeds the received command to the command analysis block 92.

The command analysis block 92 analyzes the command fed from the external interface 91 and addressed to the external device, and supplies the result of the analysis to the control block 93.

The control block 93 controls the operation of the components of the external device 24 by executing control programs recorded in the memory 95. Also, in response to the command supplied from the command analysis block 92 and addressed to the external device, the control block 93 performs control to acquire, register, or execute a data broadcast application, to fire an event, to suspend the data broadcast application, or to terminate the data broadcast application.

The operation block 94 accepts various operations performed by the user and supplies the control block 93 with operation signals corresponding to the user's operations.

The application engine 96 under control of the control block 93 acquires the data broadcast application from the server 22 via the communication interface 97 and the Internet 3, and executes the acquired data broadcast application. The video signal and audio signal of the data broadcast application relating to the AV content currently being received by the reception device 23 are supplied to the output block 98.

The communication interface 97 under control of the application engine 96 connects to the server 22 via the Internet 3 and acquires the data broadcast application.

The output block 98 displays images corresponding to the video signal fed from the application engine 96 and outputs sounds corresponding to the audio signal.

The external device 24 is structured as explained above.

### [Details of Trigger Information]

Trigger information is explained below in detail. The trigger information is information that controls the data broadcast application. For example, the trigger information may include a Register command, an Execute command, an Inject_event command, a Suspend command, and a Terminate command.

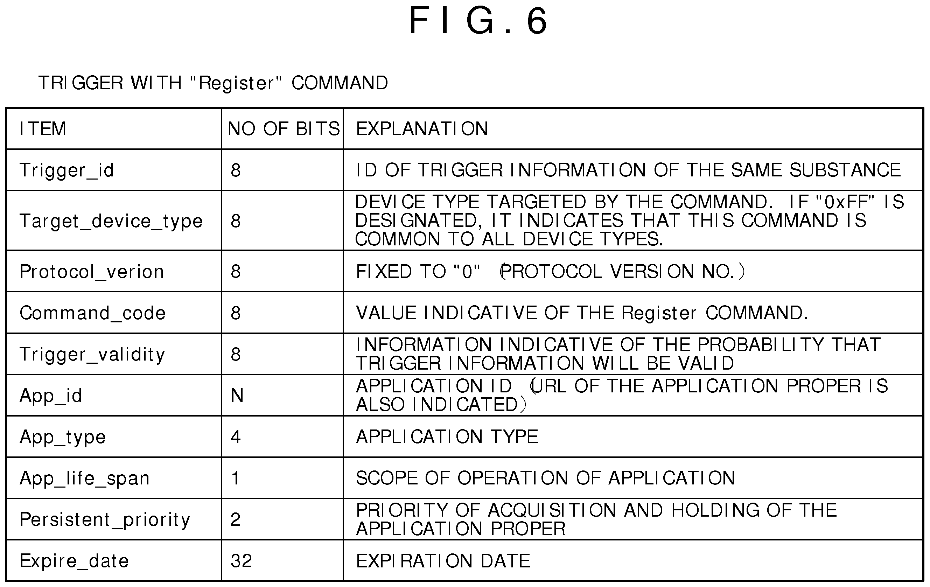

Fig. 6 lists items included in the trigger information as the Register command. The Register command is a command that instructs the reception device 23 to acquire and register the data broadcast application.

An item "Trigger_id" is information used to identify this trigger information. Where the trigger information of the same substance is transmitted a plurality of number of times, the item "Trigger_id" remains the same in each trigger information transmitted.

An item "Target_device_type" is information that indicates the type of a device targeted by the command. If "OxFF" is designated, the command is common to all device types. For example, the item "Target_device_type" may designate a specific device such as the reception device proper or the external device, or part or all of the devices involved, as the target (destination) of the command.

An item "Protcol_version" indicates a protocol version of this trigger information. An item "Command_code" indicates the type of the command of this trigger information. In the case of Fig. 6, information indicative of the Register command is described.

An item "Trigger-validity" is a server access dispersion parameter value indicating the probability that each reception device 23 upon receipt of this trigger information will perform processing in accordance with the received trigger information.

An item "App_id" is information used to identify the data broadcast application to be acquired in accordance with this trigger information. The item "App_id" also indicates a URL of a destination (server 22 in this case) from which to acquire the data broadcast application in accordance with this trigger information.

An item "App_type" is information that indicates the type of the data broadcast application (e.g., HTML5, Java, and the like) corresponding to this trigger information. An item "App_life_span" is information that indicates the scope of operation of the data broadcast application.

An item "Persistent_priority" indicates the priority applicable when the corresponding data broadcast application is to be acquired and retained. An item "Expire_date" is information that indicates an expiration date of the data broadcast application. When a data broadcast application is registered, the priority ("Persistent_priority") and expiration date ("Expire_date") are stored. The data broadcast application will then be managed in accordance with the priority and expiration date thus stored.

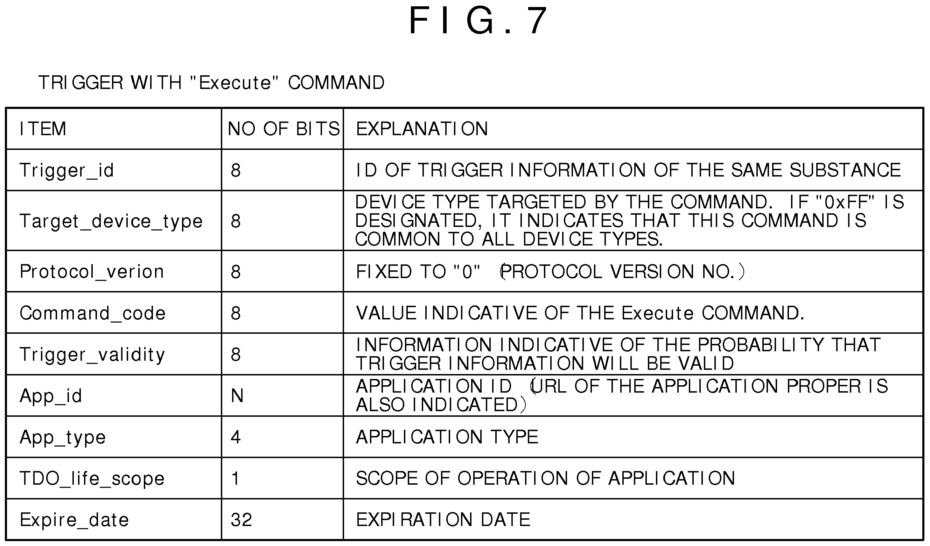

Fig. 7 lists items included in the trigger information as the Execute command. The Execute command is a command that instructs the reception device 23 to execute the data broadcast application.

The items "Trigger_id," "Target_device_type," "Protcol_version," "Command_code," "Trigger_validity" " "App-id," "App_type," and "Expire_date" are the same as those included in the trigger information as the Register command shown in Fig. 6. It should be noted that the item "Command_code" describes information indicative of the Execute command. An item "TDO_life_scope" is information that indicates the scope of operation of the data broadcast application.

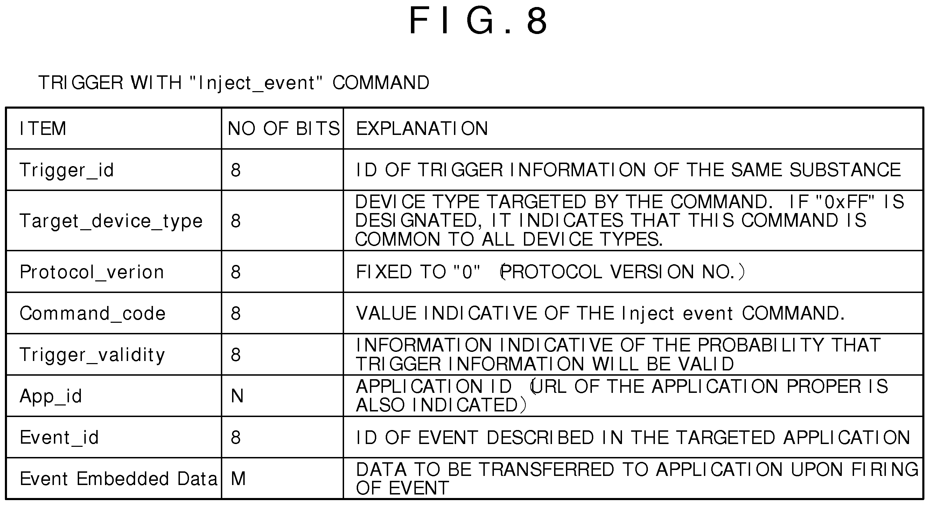

Fig. 8 lists items included in the trigger information as the Inject_event command. The Inject_event command is a command that causes the reception device 23 to fire an event in the currently executing data broadcast application.

The items "Trigger_id," "Target_device_type," "Protcol_version," "Command_code," "Trigger-validity" "App_id," and "App_type" are the same as those of the trigger information as the Register command shown in Fig. 6. It should be noted that the item "Command_code" describes information indicative of the Inject_event command.

An item "Event_id" is information used to identify an event to be fired in the data broadcast application designated by the item "App-id." An item "Event Embedded Data" describes data to be referenced upon firing of the event.

Fig. 9 lists items included in the trigger information as the Suspend command. The Suspend command is a command that causes the reception device 23 to suspend the currently executing data broadcast application.

The items "Trigger_id," "Target_device_type," "Protcol_version," "Command_code," "Trigger_validity" and "App_id" are the same as those of the trigger information as the Register command shown in Fig. 6. It should be noted that the item "Command_code" describes information indicative of the Suspend command.

Fig. 10 lists items included in the trigger information as the Terminate command. The Terminate command is a command that causes the reception device 23 to terminate the currently executing data broadcast application.

The items "Trigger_id," "Target_device_type," "Protcol_version," "Command_code," "Trigger_validity" and "App_id" are the same as those of the trigger information as the Register command shown in Fig. 6. It should be noted that the item "Command_code" describes information indicative of the Terminate command.

Fig. 11 shows a typical trigger information syntax applicable to the trigger information as each of the commands discussed above. It should be noted that the trigger information syntax is discretionary and is not limited to the example shown in Fig. 11.

### [State Transitions of Data Broadcast Application]

Fig. 12 is a state transition diagram of the data broadcast application operating in accordance with the trigger information as each of the Register, Execute, Inject_event, Suspend, and Terminate commands.

As shown in Fig. 12, the data broadcast application is defined to be in one of four states: released state, ready state, active state, and suspended state.

The released state indicates a state in which the data broadcast application has yet to be acquired by the reception device 23. The ready state indicates a state in which the data broadcast application in question has been registered in the reception device 23 but has yet to be executed thereby. The active state indicates a state in which the data broadcast application is started and currently executed. The suspended state indicates a state in which the execution of the data broadcast application is suspended and the information indicative of the state in effect upon suspension is held in the save memory 74B.

Fig. 13 shows relations in state transitions between each command and the data broadcast application.

From the released state (in which the data broadcast application has yet to be acquired by the reception device 23), the data broadcast application transitions to the ready state when acquired, retained and registered in accordance with the trigger information of the Register command.

From the ready state, the data broadcast application transitions to the active state when executed in accordance with the trigger information of the Execute command.

Also from the released state (in which the data broadcast application has yet to be acquired by the reception device 23), the data broadcast application in question transitions to the active state when acquired, registered and executed in accordance with the trigger information of the Execute command. Furthermore, in the active state, the currently executing data broadcast application performs predetermined processes such as firing of an event or reading of updated data to be reflected in the display in accordance with the trigger information of the Inject_event command.

From the active state, the currently executing data broadcast application transitions to the suspended state when suspended in accordance with the trigger information of the Suspend command. From the suspended state, the data broadcast application transitions to the ready state in accordance with the trigger information of the Terminate command.

From the suspended state, the suspended data broadcast application transitions to the active state when resumed in accordance with the trigger information of the Execute command. Also, from the active state, the currently executing data broadcast application transitions to the ready state when terminated in accordance with the trigger information of the Terminate command.

When the data broadcast application is in the ready state, active state, or suspended state and when the expiration date of this data broadcast application has expired, this data broadcast application is deleted from the cache memory 72. With its registration also canceled, the data broadcast application in question then transitions to the released state.

### [Operation Scenarios]

Using the above-described trigger information makes it possible to operate data broadcast applications as shown in Figs. 14 and 15, for example.

Fig. 14 shows a typical operation scenario in effect when different data broadcast applications are acquired by different devices.

In accordance with the progress of a TV program (AV content), the broadcast unit 21 may transmit to the reception device proper the trigger information of the Register command that instructs acquisition and registration of the data broadcast application corresponding to the TV program in question. Upon receipt of the transmitted trigger information, the reception device 23 acquires and registers the data broadcast application.

Then in accordance with the progress of the TV program, the broadcast unit 21 may transmit to the reception device proper the trigger information of the Execute command regarding the data broadcast application corresponding to that TV program. Upon receipt of the transmitted trigger information, the reception device 23 executes the data broadcast application. The execution causes the data broadcast application to be displayed superimposed on an image of the TV program.

Next, in accordance with the progress of the TV program, the broadcast unit 21 may transmit to the external device the trigger information of the Execute command targeting a data broadcast application different from that which is currently executed by the reception device 23 as the data broadcast application corresponding to that TV program. Upon receipt of the transmitted trigger information, the reception device 23 transfers the Execute command to the external device 24.

On receiving the Execute command transferred from the reception device 23, the external device 24 acquires the data broadcast application different from that which is currently executed by the reception device 23, and executes the acquired data broadcast application.

Next, in accordance with the progress of the TV program, the broadcast unit 21 may transmit the trigger information of the Inject_event command to the reception device proper. Upon receipt of the transmitted trigger information, the reception device 23 performs predetermined processes such as firing of an event in the currently executing data broadcast application or reading of updated data to be reflected in the display.

Also, in a suitably timed manner, the broadcast unit 21 may transmit to the reception device proper the trigger information of the Suspend command regarding the data broadcast application. Upon receipt of the transmitted trigger information, the reception device 23 suspends the currently executing data broadcast application. Thereafter, the broadcast unit 21 may transmit to the reception device proper the trigger information of the Execute command regarding the data broadcast application. Upon receipt of the transmitted trigger information, the reception device 23 resumes the suspended data broadcast application.

In synchronism with the end of the TV program, the broadcast unit 21 may transmit to the reception device proper and the external device the trigger information of the Terminate command to terminate the currently executing data broadcast application. Upon receipt of the transmitted trigger information, the reception device 23 terminates the currently executing data broadcast application. Also, the reception device 23 transfers the Terminate command to the external device 24.

On receiving the Terminate command transferred from the reception device 23, the external device 24 terminates the currently executing data broadcast application.

As explained above, where different data broadcast applications are acquired by different devices, the reception device 23 and external device 24 execute their respective data broadcast applications independently.

Fig. 15 shows a typical operation scenario in effect when the same data broadcast application is acquired by different devices.

As in the case of Fig. 14, the broadcast unit 21 may transmit the trigger information of the Register command and Execute command to the reception device proper. The trigger information causes the data broadcast application in question to be acquired and registered before getting executed.

Next, in accordance with the progress of a TV program, as the data broadcast application corresponding to the TV program, the broadcast unit 21 may transmit to the external device the trigger information of the Execute command regarding the same data broadcast application as that which is currently executed by the reception device 23. Upon receipt of the transmitted trigger information, the reception device 23 transfers the Execute command to the external device 24.

On receiving the Execute command transferred from the reception device 23, the external device 24 acquires and executes the same data broadcast application as that which is currently executed by the reception device 23. Also, when the external device 24 executes the data broadcast application, the reception device 23 terminates the currently executing data broadcast application.

Next, in accordance with the progress of the TV program, the broadcast unit 21 may transmit the trigger information of the Inject_event command to all devices. Upon receipt of the transmitted trigger information, the reception device 23 ignores the Inject_event command because the data broadcast application has been terminated. The reception device 23 further transfers the Inject_event command to the external device 24.

On receiving the Inject_event command transferred from the reception device 23, the external device 24 performs predetermined processes such as firing of an event in the currently executing data broadcast application or reading of updated data to be reflected in the display.

Later, in a suitably timed manner, the broadcast unit 21 may transmit to the reception device proper the trigger information of the Suspend command or Execute command regarding the data broadcast application. Upon receipt of the transmitted trigger information, the reception device 23 ignores these commands because the data broadcast application has been terminated.

Next, in synchronism with the end of the TV program, the broadcast unit 21 may transmit to all devices the trigger information of the Terminate command to terminate the currently executing data broadcast application. Upon receipt of the transmitted trigger information, the reception device 23 ignores the command because the data broadcast application has been terminated. Also, the reception device 23 transfers the Terminate command to the external device 24.

On receiving the Terminate command transferred from the reception device 23, the external device 24 terminates the currently executing data broadcast application.

As explained above, when the same data broadcast application is acquired by different devices, either the reception device 23 or the external device 24 alone executes the data broadcast application in question.

### [Operation Sequences]

Explained below in reference to Figs. 16 and 17 is how the devices making up the broadcasting system 1 typically operate when the above-described operation scenarios are carried out.

Fig. 16 shows a typical operation sequence of each device in effect when different data broadcast applications are acquired by different devices.

The reception device 23 currently receiving AV content such as a TV program transmitted from the broadcast unit 21 may receive the trigger information of the Execute command addressed to the reception device proper. Upon receipt of the trigger information, the reception device 23 requests the data broadcast application from the server 22 via the Internet 3. The reception device 23 acquires the data broadcast application transmitted from the server 22 as requested and executes the acquired data broadcast application.

Incidentally, upon receipt of the Execute command, the reception device 23 may find that the program data for use by the data broadcast application identified by the application ID ("App_id") has yet to be acquired, i.e., that the program data does not reside in the cache memory 72. In that case, the reception device 23 acquires the program data before executing the data broadcast application.

Next, the broadcast unit 21 may transmit the trigger information of the Execute command addressed to the external device. At this point, however, the external device 24 has yet to be connected with the reception device 23, so that the reception device 23 upon receipt of the trigger information ignores the command in question.

Later, the external device 24 may be coupled to the reception device 23, and a connection request may be transmitted. At this point, the connected external device 24 is subject to terminal authentication. If the coupled external device 24 is proved to be a valid terminal through terminal authentication, commands addressed to the external device from the broadcast unit 21 can be transferred to the external device 24 thereafter.

That is, if the broadcast unit 21 again transmits the trigger information of the Execute command addressed to the external device, the reception device 23 notifies the external device 24 that the Execute command addressed thereto is being received and queries as to whether or not to acquire the command. When requested by the external device 24 to acquire the command, the reception device 23 transfers the Execute command to the external device 24.

Upon receipt of the Execute command from the reception device 23, the external device 24 requests a data broadcast application, different from that which is currently executed by the reception device 23, from the server 22 via the Internet 3. The external device 24 acquires the data broadcast application transmitted from the server 22 as requested and executes the acquired data broadcast application. The external device 24 then notifies the reception device 23 that the operation of the different data broadcast application is started.

That is, the reception device 23 and external device 24 execute their respectively different data broadcast applications.

Later, the broadcast unit 21 may transmit the trigger information of the Terminate command to the reception device proper. In response, the reception device 23 terminates the currently executing data broadcast application. And when the broadcast unit 21 transmits the trigger information of the Terminate command addressed to the external device, the reception device 23 queries the external device 24 on whether or not to acquire the command. If requested to acquire the command, the reception device 23 transfers the Terminate command to the external device 24.

On receiving the Terminate command transferred from the reception device 23, the external device 24 terminates the currently executing data broadcast application. Also, the external device 24 notifies the reception device 23 that the operation of the data broadcast application is terminated.

The preceding paragraph completes the explanation of the operation sequence of each device in effect when different devices acquire different data broadcast applications.

Fig. 17 shows a typical operation sequence of each device in effect when the same data broadcast application is acquired by different devices.

The operation sequence in Fig. 17 is the same as that in Fig. 16 up to the step where the reception device 23 and external device 24 are connected with each other and subjected to terminal authentication. Thus the steps of the sequence in Fig. 17 leading up to that step will not be discussed further.

After the external device 24 is proved to be a valid terminal through terminal authentication, the broadcast unit 21 may transmit the trigger information of the Execute command addressed to the external device. In that case, the reception device 23 transfers the Execute command to the external device 24 provided the external device 24 requests acquisition of the command.

Upon receipt of the Execute command from the reception device 23, the external device 24 requests the same data broadcast application as that which is currently executed by the reception device 23 from the server 22 via the Internet 3. The external device 24 acquires the data broadcast application transmitted from the server 22 as requested and executes the acquired data broadcast application. And the external device 24 notifies the reception device 23 that the operation of the same data broadcast application is started.

Based on the notification from the external device 24, the reception device 23 terminates the currently executing data broadcast application.

That is, the reception device 23 and external device 24 do not execute the same data broadcast application respectively. When the external device 24 starts executing the same data broadcast application, the reception device 23 terminates the same data broadcast application.

Later, the broadcast unit 21 may transmit the trigger information of the Terminate command to all devices. Upon receipt of the transmitted trigger information, the reception device 23 ignores the command because the data broadcast application has already been terminated. Also, if requested by the external device 24 to acquire the command, the reception device 23 transfers the Terminate command to the external device 24.

On receiving the Terminate command transferred from the reception device 23, the external device 24 terminates the currently executing data broadcast application. Also, the external device 24 notifies the reception device 23 that the operation of the data broadcast application is terminated.

The preceding paragraph completes the explanation of the operation sequence in effect when different devices acquire the same data broadcast application.

In the operation sequences of Figs. 16 and 17, the reception device 23 may forcibly transfer the command to the external device 24 without querying the latter on whether or not to acquire the command in question.

### [Trigger Handling Process of Reception Device]

A trigger handling process to be performed by the reception device 23 is explained below in reference to the flowchart of Fig. 18.

The trigger handling process of Fig. 18 may be carried out by the reception device 23 when, for example, AV content from the broadcast unit 21 is received and its images are displayed on the display unit.

In step S101, the external device processing part 83 controls the external interface 75 to determine whether the external device 24 has made a connection request.

In step S101, if the external device 24 is coupled to the reception device 23 and the external device 24 has made a connection request, control is passed to step S102. In step S102, the external device processing part 83 communicates with the external device 24 via the external interface 75 to carry out a connection process with the external device 24. For example, the connection process may involve performing terminal authentication of the coupled external device 24.

In step S103, the external device processing part 83 acquires a device ID and a device type from the external device 24 proved to be valid through terminal authentication, for example, and records external device information in which these items of information are associated with each other to the memory 69. Incidentally, the device ID is an identifier identifying the device to be coupled, and the device type is information indicative of the type of the device in question.

On the other hand, in step S101, if the external device 24 has not made a connection request, steps S102 and S103 are skipped, and control is passed to step s104.

In step S104, the trigger extraction part 81 extracts the trigger information transmitted from the broadcast unit 21 along with AV content, and determines whether the trigger information is extracted.

If it is determined in step S104 that no trigger information has been extracted, control is passed to step S105. In step S105, the external device processing part 83 controls the external interface 75 to determine whether the connected external device 24 has notified that the operation of the data broadcast application is started.

If it is determined in step S105 that the notification of the start of application operation has not been made, control is passed to step S109. In step S109, the external device processing part 83 controls the external interface 75 to determine whether the connected external device 24 has given notification that the operation of the data broadcast application is terminated.

If it is determined in step S109 that the notification of the termination of application operation has not been made, control is returned to step S101 and the subsequent steps are repeated. If it is determined later in step S104 that the trigger information is extracted, control is passed to step S111.

In step S111, the trigger analysis part 82 determines the type of the device targeted by the command included in the received trigger information, the device type being the reception device proper, connected external device, or some other device.

The device type is determined based on the item "Target_device_type" included in each of the commands discussed above. Whether or not the device type is the currently connected external device may be determined by, say, verifying whether the device type coincides with the device type of the currently connected external device 24 included in the external device information recorded in the memory 69 in the processing of step S103. In this context, some other device means a device other than the reception device 23 or external device 24.

In step S111, if the device type is indicative of some other device, control is returned to step S101 and the subsequent steps are repeated. For example, if the received command is addressed to an external device yet to be connected or to some other device, the reception device 23 ignores the command in question.

In step S111, if the device type indicates the reception device proper, control is passed to step S112. In step S112, the trigger analysis part 82 analyzes the command included in the received trigger information.

In step S113, the trigger analysis part 82 determines whether the application ID ("App_id") of the analyzed command is set to be blocked (i.e., the blocked data broadcast application is not to be executed by the reception device 23). If it is determined in step S113 that the application ID is set to be blocked, the command is not executed, control is returned to step S101, and the subsequent steps are repeated.

On the other hand, if it is determined in step S113 that the application ID is not set to be blocked, control is passed to step S114. In step S114, based on the result of the analysis in step S112, the trigger analysis part 82 determines whether the command included in the trigger information is the Execute command.

If it is determined in step S114 that the command is the Execute command, control is passed to step S116. In step S116, the trigger analysis part 82 references the external device information recorded in the memory 69 to determine whether the trigger ID ("Trigger_id") of the Execute command coincides with the trigger ID of the trigger information addressed to the currently connected external device.

If it is determined that the trigger ID of the Execute command is different from the trigger ID of the trigger information addressed to the external device, control is passed to step S118. For example, if the trigger information addressed to the currently connected external device has yet to be received, it is determined that the trigger IDs do not coincide with each other.

In step S118, the application engine 73 under control of the device proper control block 68 starts operating the application. Specifically, the application engine 73 controls the communication interface 71 to acquire the data of the data broadcast application identified by the application ID ("App_id") of the trigger information from the server 22 via the Internet 3, and executes the data broadcast application thus acquired.

In step S119, the device proper control block 68 records the trigger ID of the currently executing data broadcast application to the memory 69. Thereafter, control is returned to step S101 and the subsequent steps are repeated.

If a command other than the Execute command is transmitted from the broadcast unit 21 and addressed to the reception device proper, the command is determined in step S114 to be a command other than the Execute command, and control is passed to step S115. In step S115, the application engine 73 under control of the device proper control block 68 performs processing in accordance with the command in question. For example, if the trigger information of the Suspend command is received, the currently executing data broadcast application is suspended.

In step S111, if the device type indicates the currently connected external device, control is passed to step S120. In step S120, the external device processing part 83 controls the external interface 75 to transfer to the external device 24 the command included in the received trigger information and addressed to the external device. This causes the external device 24 to acquire the data broadcast application corresponding to the command and to execute the acquired data broadcast application.

Although not described above for purpose of simplification, the command may alternatively be transferred to the external device 24 after the external device 24 is queried as to whether or not to acquire the command as described above.

In step S121, the trigger analysis part 82 determines whether the command transferred to the external device 24 is the Execute command. If it is determined in step S121 that the command is the Execute command, control is passed to step S122.

In step S122, the trigger analysis part 82 records to the memory 69 the trigger ID in the trigger information of the Execute command in association with the device ID of the currently connected external device 24. Since the external device information in which the device ID and the device type are associated with each other was already recorded to the memory 69 in step S103, the device ID included in the external device information is further associated with the trigger ID in this step.

That is, with the device ID of the transfer destination recorded in association with the trigger ID in the trigger information of the Execute command upon transfer of the Execute command, when the Execute command addressed to the reception device proper is subsequently received, it is determined whether the trigger ID in the trigger information of the received Execute command coincides with the trigger ID in the trigger information of the Execute command transferred to the external device 24 serving as the transfer destination. If it is determined that the trigger IDs coincide with each other ("Yes" in step S116), the application ID involved may be set to be blocked (step S117). This prevents the reception device 23 from executing the blocked data broadcast application that is currently executed by the external device 24.

Upon completion of step S117 or S122, control is returned to step S101 and the subsequent steps are repeated.

When starting to execute the data broadcast application, the external device 24 notifies the reception device 23 that the operation of the application is started. In step S105, it is determined that the notification of the start of application operation has been made. Control is then passed to step S106.

In step S106, the trigger analysis part 82 determines whether the trigger ID of the data broadcast application currently executed by the external device 24 having made the notification of the start of application operation coincides with the trigger ID of the data broadcast application currently executed by the reception device 23.

If it is determined in step S106 that the trigger IDs coincide with each other, control is passed to step S107. In step S107, the application engine 73 under control of the device proper control block 68 terminates the currently executing data broadcast application.

In step S108, the trigger analysis part 82 causes the application ID corresponding to the data broadcast application currently executed by the external device 24 (i.e., data broadcast application terminated by the reception device 23) to be blocked so that the data broadcast application currently executed by the external device 24 will not be executed by the reception device 23.

That is, if the reception device 23 and external device 24 acquire the same data broadcast application, the data broadcast application currently executed by the reception device 23 is terminated; only the external device 24 is allowed to execute the data broadcast application in question.

Upon completion of step S108, control is returned to step S101 and the subsequent steps are repeated.

If it is determined in step S106 that the trigger IDs do not coincide with each other, steps S107 and S108 are skipped, and control is passed to step S109.

That is, if the reception device 23 and external device 24 acquire different data broadcast applications, the reception device 23 and external device 24 execute their respective data broadcast applications that are different from each other.

Later, when the external device 24 terminates the data broadcast application, the reception device 23 is notified of the termination of application operation. In step S109, it is determined that the notification of the termination of application operation has been made. Control is then passed to step S110.

In step S110, the trigger analysis part 82 deblocks the application ID corresponding to the data broadcast application terminated by the external device 24 having made the notification of the termination of application operation, so that the reception device 23 may execute the data broadcast application that has been terminated by the external device 24.

Upon completion of step S110, control is returned to step S101 and the subsequent steps are repeated.

The preceding paragraph completes the explanation of the trigger information handling process carried out by the reception device 23.

According to the above-described trigger information handling process performed by the reception device 23, the reception device proper can execute a data broadcast application, fire an event, or terminate the data broadcast application in linkage with AV content such as a TV program. Furthermore, the external device can execute a data broadcast application, fire an event, or terminate the data broadcast application in linkage with AV content such as a TV program.

### [Trigger Handling Process of External Device]

A trigger handling process to be performed by the external device 24 is explained below in reference to the flowchart of Fig. 19.

In step S151, the control block 93 controls the external interface 91 to determine whether the external device 24 is coupled with the reception device 23. If it is determined in step S151 that the external device 24 is coupled with the reception device 23, control is passed to step S152.

In step S152, the control block 93 controls the external interface 91 to notify the reception device 23 of a connection request to the reception device 23. In step S153, the control block 93 communicates with the reception device 23 via the external interface 91 to perform a connection process with the reception device 23. For example, the connection process may involve termination authentication of the external device 24 performed by the reception device 23.

In step S154, the control block 93 controls the external interface 91 to determine whether the command transferred from the reception device 23 is received. If it is determined in step S154 that the command has yet to be received, the determination process of step S154 is repeated.

If it is determined in step S154 that the command is received, control is passed to step S155. In step S155, the command analysis block 92 analyzes the command received from the reception device 23.

In step S156, based on the result of the analysis in step S156, the command analysis block 92 determines whether the received command is the Execute command. If it is determined in step S156 that the command is the Execute command, control is passed to step S157.

In step S157, the application engine 96 under control of the control block 93 starts operating the application. Specifically, the application engine 96 controls the communication interface 97 to acquire the data of the data broadcast application identified by the application ID ("App-id") from the server 22 via the Internet 3, and executes the data broadcast application thus acquired.

In step S158, the control block 93 controls the external interface 91 to notify the reception device 23 of the start of application operation. Upon completion of step S158, control is returned to step S154 and the subsequent steps are repeated.

If it is determined in step S156 that the command in question is a command other than the Execute command, control is passed to step S159. In step S159, based on the result of the analysis in step S155, the command analysis block 92 determines whether the received command is the Terminate command.

If it is determined in step S159 that the command is not the Terminate command, i.e., that it is a command other than the Execute command or Terminate command, control is passed to step S160. In step S160, the application engine 96 under control of the control block 93 performs processing corresponding to the command. For example, if the trigger information of the Suspend command is received, the currently executing data broadcast application is suspended. Upon completion of step S160, control is returned to step S154 and the subsequent steps are repeated.

If it is determined in step S159 that the command is the Terminate command, control is passed to step S161. In step S161, the application engine 96 under control of the control block 93 terminates the currently executing data broadcast application.

In step S162, the control block 93 controls the external interface 91 to notify the reception device 23 of the termination of application operation. Upon completion of step S162, control is returned to step S154 and the subsequent steps are repeated.

The preceding paragraph completes the explanation of the trigger information handling process performed by the external device 24.

According to the above-described trigger information handling process performed by the external device 24, the external device under control of the reception device proper can execute a data broadcast application, fire an event, or terminate the data broadcast application in linkage with AV content such as a TV program.

Fig. 20 shows a typical coordination of data broadcast applications performed by the reception device 23 and external device 24.

As shown in Fig. 20, the display unit of the reception device 23 displays an image of AV content currently received from the broadcast unit 21. In the bottom left corner of that image appears an image of the data broadcast application in superimposed fashion. When the reception device 23 coupled with the external device 24 receives a command that causes the data broadcast application currently executed by the reception device 23 to be executed by the external device 24, that command is transferred to the external device 24.

Based on the command transferred from the reception device 23, the external device 24 acquires the same data broadcast application as that which is currently executed by the reception device 23 from the server 22 via the Internet 3 and executes the data broadcast application thus acquired. As a result of this, a screen of the external device 24 displays the same image of the data broadcast application as that appearing in the bottom left corner of the display unit of the reception device 23.

When the image of the data broadcast application is displayed on the screen of the external device 24, the reception device 23 causes the image of the data broadcast application superimposed on the AV content to disappear and leaves only the AV content displayed.

The example explained above was a case in which the same data broadcast application is acquired. If the reception device 23 and external device 24 acquire different data broadcast applications as described above, the two devices execute their respective data broadcast applications that are different from each other.

In the manner explained above, the external device 24 connected to the reception device 23 can be operated in linkage with the progress of AV content.

### [Typical Structure of Computer]

Incidentally, the series of the steps and processes described above may be executed either by hardware or by software. Where the software-based series of processing is to be carried out, a program constituting the software is installed from a program recording medium into either a computer incorporated in a dedicated hardware or, for example, a general-purpose personal computer or like equipment capable of executing diverse functions by installing various programs.

Fig. 21 is a block diagram showing a typical hardware structure of a computer that carries out the above-described steps and processes using a program.

In a computer 200, a CPU (Central Processing Unit) 201, a ROM (Read Only Memory) 202, and a RAM (Random Access Memory) 203 are interconnected via a bus 204.

An input/output interface 205 is further connected to the bus 204. The input/output interface 205 is connected with an input block 206 generally made up of a keyboard, a mouse, and a microphone; an output block 207 typically formed by a display unit and a speaker; a storage block 208 composed of a hard disk, a nonvolatile memory or the like; a communication block 209 constituted by a network interface or the like; and a drive 210 that drives removable media 211 such as a magnetic disk, an optical disk, a magneto-optical disk, or a semiconductor memory.

In the computer structured as outlined above, the CPU 201 performs the above-described series of steps and processes by loading a relevant program from, say, the storage block 208 into the RAM 203 via the input/output interface 205 and bus 204 and by executing the program thus loaded.

Also, the program to be executed by the computer may be processed in the depicted sequence of this specification (i.e., on a time series basis), in parallel, or in otherwise appropriately timed fashion such as when it is invoked as needed.

Furthermore, the program may be processed by a single computer or by a plurality of computers on a distributed basis. The program may also be transferred to a remote computer or computers for execution.

In this specification, the term "system" refers to an entire configuration made up of a plurality of component devices.

### [Reference Signs List]

1 Broadcasting system, 21 Broadcast unit, 22 Server, 23 Reception device, 24 External device, 61 Tuner, 67 Trigger processing block, 68 Device proper control block, 71 Communication interface, 73 Application engine, 75 External interface, 81 Trigger extraction part, 82 Trigger analysis part, 83 External device processing part, 200 Computer, 201 CPU

## Claims

1. A reception device (23) comprising:
a reception block configured to receive transmitted audio-video, AV, content;
a trigger extraction part (81) configured to extract trigger information about the control of an application program to be executed in linkage with the AV content either by the reception device (23) or by an external device (24) connected to the reception device, the trigger information comprising a command, a target device type and an application ID, and being transmitted together with the AV content;
a device control block (68) configured such that if the extracted trigger information indicates a command targeted at a device type of the type of the reception device, then the device control block controls the operation of the application program identified by the application ID in accordance with the command indicated by the trigger information; and
an external device processing part (83) configured such that if the command indicated by the extracted trigger information is targeted at a device type of the type of the connected external device, then the external device processing part transfers the command indicated by the trigger information to the connected external device,
wherein the application program to be executed by the connected external device (24) is a data broadcast application identified by the application ID, and
wherein the device control block is adapted to terminate the application program currently executed by the reception device, when the external device processing part determines that the operation of the application program executed by the external device has started and if the application program executed by the external device is the same as the application program currently executed by the reception device.

2. The reception device according to claim 1, wherein, if the application program executed by the external device is different from the application program currently executed by the reception device, the device control block causes the reception device to execute the application program concurrently.

3. The reception device according to any preceding claim, wherein, if the application ID has been set to be blocked, the device control block prevents the reception device from executing the application program corresponding to the application ID.

4. The reception device according to any preceding claim, wherein the target device type is for designating either a specific device type or part or all of the device types targeted by the command.

5. The reception device according to any preceding claim, wherein the command of the trigger information includes any one of commands to acquire, register, and execute a application program, a command to fire an event, a command to suspend the application program, and a command to terminate the application program.

6. The reception device according to claim 5, wherein, in response to each of the commands, the device control block controls acquisition, registration, or execution of the application program, firing of an event in the currently executing application program, suspension of the currently executing application program, or termination of the currently executing application program.

7. The reception device according to claim 5, wherein the external device processing part transfers to the external device any one of the commands to acquire, register, and execute the application program, the command to fire an event in the currently executing application program, the command to suspend the currently executing application program, and the command to terminate the currently executing application program.

8. A reception method comprising the steps of:
causing a reception device to receive transmitted audio-video, AV, content;
causing the reception device to extract trigger information about control of an application program to be executed in linkage with the AV content either by the reception device or by an external device connected to the reception device, the trigger information comprising a command, a target device type and an application ID, and being transmitted together with the AV content;
if the extracted trigger information indicates a command targeted at a device type of the type of the reception device, then causing the reception device to control the operation of the application program in accordance with the command indicated by the trigger information; and
if the command indicated by the extracted trigger information is targeted at a device type of the type of the connected external device, then causing the reception device to transfer the command indicated by the trigger information to the connected external device,
wherein the application program to be executed by the connected external device (24) is a data broadcast application identified by the application ID, and
terminating the application program currently executed by the reception device, when an external device processing part of the reception device determines that the operation of the application program executed by the external device has started and if the application program executed by the external device is the same as the application program currently executed by the reception device.

9. The reception method according to claim 8, further comprising the step of, if the application program executed by the external device is different from the application program currently executed by the reception device, causing the reception device to execute the application program concurrently.

10. The reception method according to claim 8 or 9, further comprising the step of, if the application ID has been set to be blocked, preventing the reception device from executing the application program corresponding to the application ID.

11. The reception method according to any of claims 8 to 10, wherein the target device type is for designating either a specific device type or part or all of the device types targeted by the command.

12. The reception method according to any of claims 8 to 11, wherein the command of the trigger information includes any one of commands to acquire, register, and execute a application program, a command to fire an event, a command to suspend the application program, and a command to terminate the application program.

13. The reception method according claim 12, further comprising the step of, in response to each of the commands and by a device control block of the reception device, controlling acquisition, registration, or execution of the application program, firing of an event in the currently executing application program, suspension of the currently executing application program, or termination of the currently executing application program.

14. A computer program comprising instructions to cause the device of any of claims 1-7 to execute the steps of the method of any of claims 8 to 13.

15. Television set comprising a reception device (23) according to any of claims 1 to 7.

## Patentansprüche

1. Empfangsvorrichtung (23), aufweisend:
einen Empfangsblock, der dafür ausgebildet ist, dass er gesendete Audio-Video-, AV-, Inhalte empfängt;
einen Trigger-Extraktionsteil (81), der dafür ausgebildet ist, Triggerinformationen über die Steuerung eines Anwendungsprogramms zu extrahieren, das in Verbindung mit dem AV-Inhalt entweder durch die Empfangsvorrichtung (23) oder durch eine mit der Empfangsvorrichtung verbundene externe Vorrichtung (24) ausgeführt werden soll, wobei die Triggerinformationen einen Befehl, einen Zielvorrichtungstyp und eine Anwendungs-ID aufweisen und zusammen mit dem AV-Inhalt übertragen werden;
einen Vorrichtungssteuerblock (68), der dafür ausgebildet ist, dass, wenn die extrahierte Triggerinformation einen Befehl anzeigt, der auf einen Vorrichtungstyp des Typs der Empfangsvorrichtung abzielt, dann der Vorrichtungssteuerblock den Betrieb des durch die Anwendungs-ID identifizierten Anwendungsprogramms gemäß dem durch die Triggerinformation angezeigten Befehl steuert; und
einen externen Vorrichtungsverarbeitungsteil (83), der dafür ausgebildet ist, dass, wenn der durch die extrahierte Triggerinformation erzeugte Befehl auf einen Vorrichtungstyp des Typs der angeschlossenen externen Vorrichtung gerichtet ist, dann der externe Geräteverarbeitungsteil den durch die Triggerinformation angezeigten Befehl an die angeschlossene externe Vorrichtung überträgt,
wobei das von der angeschlossenen externen Vorrichtung (24) auszuführende Anwendungsprogramm eine durch die Anwendungs-ID identifizierte Datenübertragungsanwendung ist, und
wobei der Vorrichtungssteuerungsblock ausgebildet ist, das aktuell von der Empfangsvorrichtung ausgeführte Anwendungsprogramm zu beenden, wenn der externe Vorrichtungsverarbeitungsteil ermittelt, dass der Betrieb des von der externen Vorrichtung ausgeführten Anwendungsprogramms gestartet wurde, und wenn das von der externen Vorrichtung ausgeführte Anwendungsprogramm dasselbe ist wie das aktuell von der Empfangsvorrichtung ausgeführte Anwendungsprogramm.

2. Empfangsvorrichtung nach Anspruch 1, wobei, wenn sich das von der externen Vorrichtung ausgeführte Anwendungsprogramm von dem aktuell von der Empfangsvorrichtung ausgeführten Anwendungsprogramm unterscheidet, der Vorrichtungssteuerblock die Empfangsvorrichtung veranlasst, das Anwendungsprogramm gleichzeitig auszuführen.

3. Empfangsvorrichtung nach einem der vorhergehenden Ansprüche, wobei, wenn die Anwendungs-ID gesperrt ist, der Vorrichtungssteuerungsblock verhindert, dass die Empfangsvorrichtung das der Anwendungs-ID entsprechende Anwendungsprogramm ausführt.

4. Empfangsvorrichtung nach einem der vorhergehenden Ansprüche, wobei der Zielvorrichtungstyp entweder einen bestimmten Vorrichtungstyp oder einen Teil oder alle Vorrichtungstypen bezeichnet, auf die sich der Befehl bezieht.

5. Empfangsvorrichtung nach einem der vorhergehenden Ansprüche, wobei der Befehl der Triggerinformation irgendeinen Befehl aufweist von Befehlen zum Erfassen, Registrieren und Ausführen eines Anwendungsprogramms, einen Befehl zum Auslösen eines Ereignisses, einen Befehl zum Anhalten des Anwendungsprogramms und einen Befehl zum Beenden des Anwendungsprogramms enthält.

6. Empfangsvorrichtung nach Anspruch 5, wobei der Vorrichtungssteuerblock als Reaktion auf jeden entsprechenden der Befehle die Erfassung, Registrierung oder Ausführung des Anwendungsprogramms, das Auslösen eines Ereignisses im aktuell ausgeführten Anwendungsprogramm, die Unterbrechung des aktuell ausgeführten Anwendungsprogramms oder das Beenden des aktuell ausgeführten Anwendungsprogramms steuert.

7. Empfangsvorrichtung nach Anspruch 5, wobei der externe Vorrichtungsverarbeitungsteil der externen Vorrichtung irgendeinen Befehl der Befehle zum Erfassen, Registrieren und Ausführen des Anwendungsprogramms, den Befehl zum Auslösen eines Ereignisses im aktuell ausgeführten Anwendungsprogramm, den Befehl zum Anhalten des aktuell ausgeführten Anwendungsprogramms und den Befehl zum Beenden des aktuell ausgeführten Anwendungsprogramms überträgt.

8. Empfangsverfahren, aufweisend die Schritte:
Bewirken, dass eine Empfangsvorrichtung gesendete Audio-Video-, AV-, Inhalte empfängt;
Bewirken, dass die Empfangsvorrichtung Triggerinformationen über die Steuerung eines Anwendungsprogramms, das in Verbindung mit dem AV-Inhalt entweder durch die Empfangsvorrichtung oder durch ein mit der Empfangsvorrichtung verbundene externe Vorrichtung ausgeführt werden soll, extrahiert, wobei die Triggerinformationen einen Befehl, einen Zielvorrichtungstyp und eine Anwendungs-ID aufweisen und zusammen mit dem AV-Inhalt übertragen werden;
wenn die extrahierte Triggerinformation einen Befehl anzeigt, der auf einen Vorrichtungstyp des Typs der Empfangsvorrichtung abzielt, dann die Empfangsvorrichtung veranlassen, den Betrieb des Anwendungsprogramms gemäß dem durch die Triggerinformation angegebenen Befehl zu steuern; und
wenn der durch die extrahierte Triggerinformation angezeigte Befehl auf einen Vorrichtungstyp des Typs der angeschlossenen externen Vorrichtung abzielt, dann die Empfangsvorrichtung veranlassen, den durch die Triggerinformation angezeigten Befehl an die angeschlossene externe Vorrichtung zu übertragen,
wobei das von der angeschlossenen externen Vorrichtung (24) auszuführende Anwendungsprogramm eine durch die Anwendungs-ID identifizierte Datenübertragungsanwendung ist, und
Beenden des aktuell von der Empfangsvorrichtung ausgeführten Anwendungsprogramms, wenn ein externer Vorrichtungsverarbeitungsteil der Empfangsvorrichtung ermittelt, dass der Betrieb des von der externen Vorrichtung ausgeführten Anwendungsprogramms gestartet wurde, und wenn das von der externen Vorrichtung ausgeführte Anwendungsprogramm dasselbe ist wie das aktuell von der Empfangsvorrichtung ausgeführte Anwendungsprogramm.

9. Empfangsverfahren nach Anspruch 8, das ferner den Schritt aufweist, dass, wenn sich das von der externen Vorrichtung ausgeführte Anwendungsprogramm von dem aktuell von der Empfangsvorrichtung ausgeführten Anwendungsprogramm unterscheidet, die Empfangsvorrichtung veranlasst wird, das Anwendungsprogramm gleichzeitig auszuführen.

10. Empfangsverfahren nach Anspruch 8 oder 9, das ferner den Schritt aufweist, dass, wenn die Anwendungs-ID so eingestellt wurde, dass sie gesperrt ist, die Empfangsvorrichtung daran gehindert wird, das der Anwendungs-ID entsprechende Anwendungsprogramm auszuführen.

11. Empfangsverfahren nach einem der Ansprüche 8 bis 10, wobei der Zielvorrichtungstyp entweder einen bestimmten Vorrichtungstyp oder einen Teil oder alle Vorrichtungstypen bezeichnet, auf die sich der Befehl bezieht.

12. Empfangsverfahren nach einem der Ansprüche 8 bis 11, wobei der Befehl der Triggerinformation irgendeinen Befehl der Befehle zum Erfassen, Registrieren und Ausführen eines Anwendungsprogramms, einen Befehl zum Auslösen eines Ereignisses, einen Befehl zum Anhalten des Anwendungsprogramms und einen Befehl zum Beenden des Anwendungsprogramms aufweist.

13. Empfangsverfahren nach Anspruch 12, das ferner den Schritt aufweist, in Reaktion auf jeden entsprechenden der Befehle, und durch einen Vorrichtungssteuerblock der Empfangsvorrichtung, die Erfassung, Registrierung oder Ausführung des Anwendungsprogramms zu steuern, ein Ereignis in dem aktuell ausgeführten Anwendungsprogramm auszulösen, das aktuell ausgeführte Anwendungsprogramm zu unterbrechen oder das aktuell ausgeführte Anwendungsprogramm zu beenden.

14. Ein Programm mit Anweisungen, das eine Vorrichtung nach einer der Ansprüche 1-7 veranlasst, das Verfahren nach einem der Ansprüche 8 bis 13 auszuführen.

15. Fernsehgerät mit einer Empfangseinrichtung (23) nach einem der Ansprüche 1 bis 7.

## Revendications

1. Dispositif de réception (23) comprenant :
un bloc de réception conçu pour recevoir un contenu audio-vidéo, AV, transmis ;
une partie d'extraction de déclenchement (81) conçue pour extraire des informations de déclenchement concernant la commande d'un programme d'application à exécuter en lien avec le contenu AV soit par le dispositif de réception (23), soit par un dispositif externe (24) connecté au dispositif de réception, les informations de déclenchement comprenant une instruction, un type de dispositif cible et une ID d'application et étant transmises avec le contenu AV ;
un bloc de commande de dispositif (68) conçu de sorte que si les informations de déclenchement extraites indiquent une instruction ciblée vers un type de dispositif du type du dispositif de réception, le bloc de commande de dispositif commande alors le fonctionnement du programme d'application identifié par l'ID d'application en fonction de l'instruction indiquée par les informations de déclenchement ; et
une partie de traitement de dispositif externe (83) conçue de sorte que si l'instruction indiquée par les informations de déclenchement extraites est ciblée vers un type de dispositif du type du dispositif externe connecté, alors la partie de traitement de dispositif externe transfère l'instruction indiquée par les informations de déclenchement au dispositif externe connecté ;
dans lequel le programme d'application à exécuter avec le dispositif externe connecté (24) est une application de diffusion de données identifiée par l'ID d'application, et
dans lequel le bloc de commande de dispositif est conçu pour terminer le programme d'application actuellement exécuté par le dispositif de réception lorsque la partie de traitement de dispositif externe détermine que le fonctionnement du programme d'application exécuté par le dispositif externe a commencé et si le programme d'application exécuté par le dispositif externe est le même que le programme d'application actuellement exécuté par le dispositif de réception.

2. Dispositif de réception selon la revendication 1, dans lequel, si le programme d'application exécuté par le dispositif externe est différent du programme d'application actuellement exécuté par le dispositif de réception, le bloc de commande de dispositif fait que le dispositif de réception exécute le programme d'application de manière concurrente.

3. Dispositif de réception selon l'une quelconque des revendications précédentes, dans lequel, si l'ID d'application a été réglée pour être bloquée, le bloc de commande de dispositif empêche le dispositif de réception d'exécuter le programme d'application correspondant à l'ID d'application.

4. Dispositif de réception selon l'une quelconque des revendications précédentes, dans lequel le type de dispositif cible sert à désigner soit un type de dispositif spécifique soit une partie ou la totalité des types de dispositifs ciblés par l'instruction.

5. Dispositif de réception selon l'une quelconque des revendications précédentes, dans lequel l'instruction des informations de déclenchement comprend une quelconque d'instructions pour acquérir, enregistrer et exécuter un programme d'application, une instruction pour lancer un événement, une instruction pour suspendre le programme d'application et une instruction pour terminer le programme d'application.

6. Dispositif de réception selon la revendication 5, dans lequel, en réponse à chacune des instructions, le bloc de commande de dispositif commande l'acquisition, l'enregistrement ou l'exécution du programme d'application, le lancement d'un événement dans le programme d'application actuellement exécuté, la suspension du programme d'application actuellement exécuté ou la fin du programme d'application actuellement exécuté.

7. Dispositif de réception selon la revendication 5, dans lequel la partie de traitement de dispositif externe transfère au dispositif externe une quelconque des instructions pour acquérir, enregistrer et exécuter un programme d'application, l'instruction pour lancer un événement dans le programme d'application actuellement exécuté, l'instruction pour suspendre le programme d'application actuellement exécuté et l'instruction pour terminer le programme d'application actuellement exécuté.

8. Procédé de réception comprenant les étapes consistant à :
faire qu'un dispositif de réception va recevoir un contenu audio-vidéo, AV, transmis ;
faire que le dispositif de réception va extraire des informations de déclenchement concernant la commande d'un programme d'application à exécuter en lien avec le contenu AV soit par le dispositif de réception, soit par un dispositif externe connecté au dispositif de réception, les informations de déclenchement comprenant une instruction, un type de dispositif cible et une ID d'application et étant transmises avec le contenu AV ;
si les informations de déclenchement extraites indiquent une instruction ciblée vers un type de dispositif du type du dispositif de réception, faire que le dispositif de réception va alors commander le fonctionnement du programme d'application en fonction de l'instruction indiquée par les informations de déclenchement ; et
si l'instruction indiquée par les informations de déclenchement extraites est ciblée vers un type de dispositif du type du dispositif externe connecté, alors faire que le dispositif de réception transfère l'instruction indiquée par les informations de déclenchement au dispositif externe connecté ;
dans lequel le programme d'application à exécuter avec le dispositif externe connecté (24) est une application de diffusion de données identifiée par l'ID d'application, et
terminer le programme d'application actuellement exécuté par le dispositif de réception lorsqu'une partie de traitement de dispositif externe du dispositif de réception détermine que le fonctionnement du programme d'application exécuté par le dispositif externe a commencé et si le programme d'application exécuté par le dispositif externe est le même que le programme d'application actuellement exécuté par le dispositif de réception.

9. Procédé de réception selon la revendication 8, comprenant en outre l'étape consistant à, si le programme d'application exécuté par le dispositif externe est différent du programme d'application actuellement exécuté par le dispositif de réception, faire que le dispositif de réception exécute le programme d'application de manière concurrente.

10. Procédé de réception selon les revendications 8 ou 9, comprenant en outre l'étape consistant à, si l'ID d'application a été réglée pour être bloquée, empêcher le dispositif de réception d'exécuter le programme d'application correspondant à l'ID d'application.

11. Procédé de réception selon l'une quelconque des revendications 8 à 10, dans lequel le type de dispositif cible sert à désigner soit un type de dispositif spécifique soit une partie ou la totalité des types de dispositifs ciblés par l'instruction.

12. Procédé de réception selon l'une quelconque des revendications 8 à 11, dans lequel l'instruction des informations de déclenchement comprend une quelconque d'instructions pour acquérir, enregistrer et exécuter un programme d'application, une instruction pour lancer un événement, une instruction pour suspendre le programme d'application et une instruction pour terminer le programme d'application.

13. Procédé de réception selon la revendication 12, comprenant en outre l'étape consistant à, en réponse à chacune des instructions et avec un bloc de commande de dispositif du dispositif de réception, commander l'acquisition, l'enregistrement ou l'exécution du programme d'application, le lancement d'un événement dans le programme d'application actuellement exécuté, la suspension du programme d'application actuellement exécuté ou la fin du programme d'application actuellement exécuté.

14. Programme informatique comprenant des instructions pour faire que le dispositif selon l'une quelconque des revendications 1 à 7 exécute les étapes du procédé selon l'une quelconque des revendications 8 à 13.

15. Téléviseur comprenant un dispositif de réception (23) selon l'une quelconque des revendications 1 à 7.
